# EUROPEAN PATENT SPECIFICATION

(11) **EP 0 594 139 B1**
(45) Date of publication and mention of the grant of the patent: **23.07.1997**
(21) Application number: 93116896.7
(22) Date of filing: 19.10.1993
(51) Int. Cl.: G11B 7/09

(54) **Objective lens driving apparatus**
Antriebsvorrichtung zum Verstellen einer Objektivlinse
Appareil pour actionner une lentille d'objectif

(30) Priority: 22.10.1992 JP 284106/92
(43) Date of publication of application: 27.04.1994
(73) Proprietor: SHARP KABUSHIKI KAISHA, Osaka-shi Osaka-fu (JP)
(72) Inventor: Sekimoto, Yoshihiro, Nara-shi, Nara-ken (JP); Inui, Toshiharu, Yamatokouriyama-shi, Nara-ken (JP); Nakata, Yasuo, Takaichi-gun, Nara-ken (JP); Ogata, Nobuo, Tenri-shi, Nara-ken (JP); Sato, Hideaki, Yamatokouriyama-shi, Nara-ken (JP)
(74) Representative: Müller, Frithjof E., Dipl.-Ing.

(56) References cited:
- DE-A- 3 804 075
- US-A- 5 018 836
- PATENT ABSTRACTS OF JAPAN vol. 15, no. 237 (P-1216)19 June 1991
- PATENT ABSTRACTS OF JAPAN vol. 11, no. 219 (P-596)16 July 1987
- PATENT ABSTRACTS OF JAPAN vol. 9, no. 312 (P-411)7 December 1985

## Description

### BACKGROUND OF THE INVENTION

### Field of the Invention

The present invention relates to an objective lens driving apparatus in accordance with the precharacterizing part of independent claims 1 and 5. Such an objective lens driving apparatus is known from DE-A-3 804 075.

### Description of the Background Art

An objective lens driving apparatus which drives an objective lens biaxially to control a position of condensed light of a light beam which irradiates information recording medium such as magnetooptical disk or the like through an objective lens in focusing and tracking directions has been known.

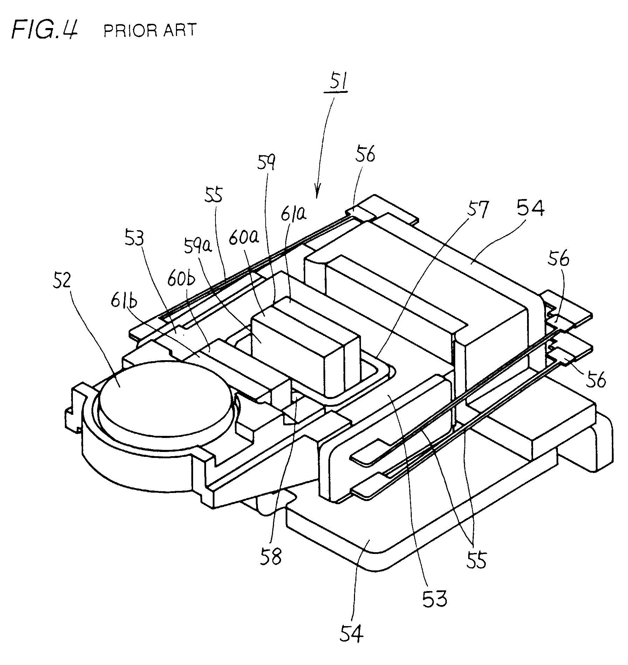

Fig. 4 is a perspective view of an example of such objective lens driving apparatus.

A lens holder 53 which holds an objective lens 52 is provided for an objective lens driving apparatus 51. At both sides of lens holder 53, elastic bodies 55, 55 which support lens holder 53 movable in two directions against a fixed portion 54 are attached at upper and lower positions, and damper members 56, 56,... are adhered to the joint portion in the vicinity of fixed portion 54. Elastic body 55 has a portion fixed to fixed portion 54 and a portion fixed to lens holder 53, which are formed of one linear elastic member. Damper member 56 is affixed in the vicinity of a joint between elastic body 55 and fixed portion 54.

A focusing coil 57 and a tracking coil 58 are adhered to the center hole of lens holder 53. Parts of focusing coil 57 and tracking coil 58 are located in a magnetic gap 59a in a magnetic circuit 59 extended from fixed portion 54, and the magnetic circuit includes permanent magnets 60a, 60b and yoke portions 61a, 61b. Focusing coil 57 is coiled to enclose one of the permanent magnets 60a and yoke 61a, and a portion unnecessary to generate driving force is positioned outside magnetic gap 59a.

In the conventional structure mentioned above, vibrations of movable portion in the focusing and tracking directions are suppressed to some extent by damper member 56.

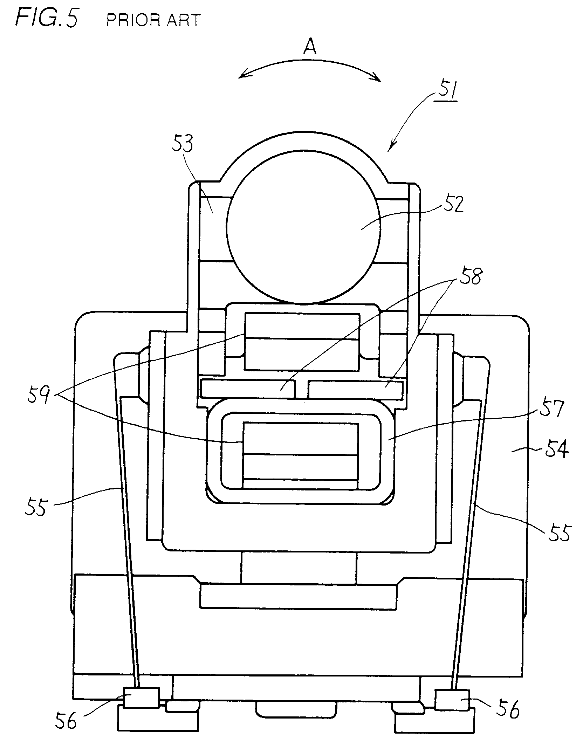

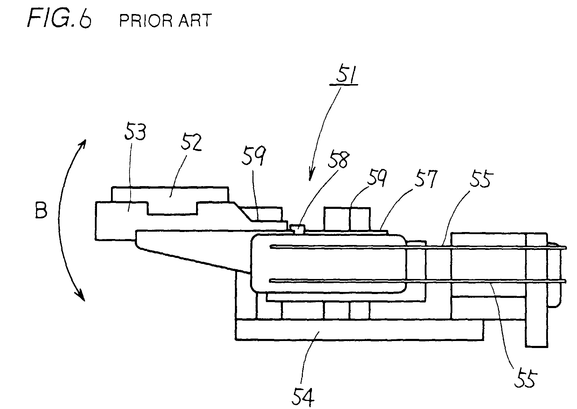

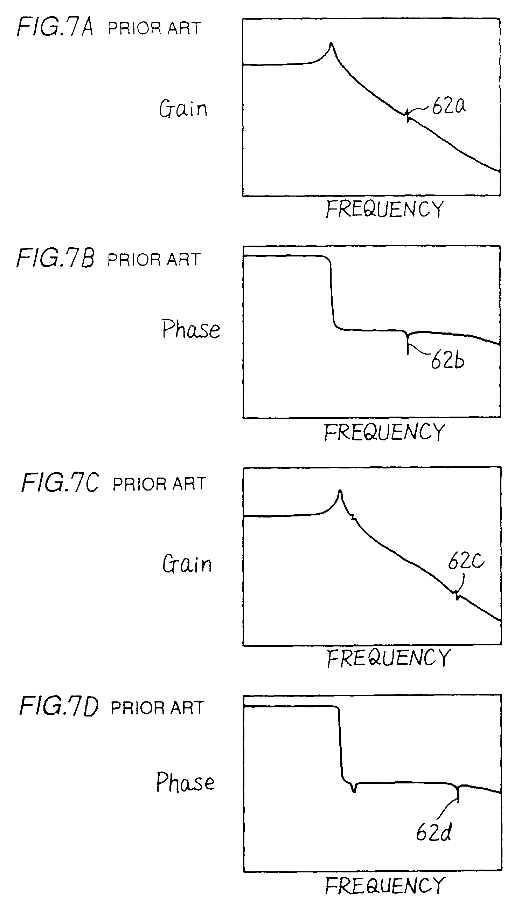

Fig. 5 is a plan view of a conventional object lens driving apparatus showing a turn of the movable portion around an axis of the focusing direction, and Fig. 6 is a side view of the conventional objective lens driving apparatus showing a turn of the movable portion around an axis of the tracking direction. However, vibrations of elastic body 55 in expanding and contracting directions along the length or a torsional vibration of elastic body 55, which are generated when turning force around the axis of the focusing directions as represented by an arrow A in Fig. 5 and turning force around the axis of the tracking direction as represented by an arrow B in Fig. 6 are exerted, are hardly suppressed. Therefore, as shown in Figs. 7A, 7B, 7C and 7D, high resonance peaks 62a, 62b, 62c and 62d remain in transfer function. Figs. 7A and 7B are graphs showing gain-to-frequency and phase-to-frequency transfer function in the focusing direction, and Figs. 7C and 7D are graphs showing gain-to-frequency and phase-to-frequency transfer function in the tracking direction.

The structure of a supporting member to suppress the vibrations mentioned above as it is disclosed in the above DE-A-3 804 075 has a flexible portion (elastic body) curved in the form of a circular arc. Therefore, it is necessary to process the elastic body to a complicated shape and manufacture thereof is difficult. Additionally, since the elastic body has a complicated shape, it is disadvantageous in miniaturizing the apparatus according to a miniaturized, light weighted movable portion.

Furthermore, since the flexible portion is in a small form of circular arc, it is difficult to obtain a suitable primary resonance frequency for the miniaturized, light weighted movable portion.

### SUMMARY OF THE INVENTION

One object of the invention is to provide an objective lens driving apparatus provided with an elastic body having a simpler shape, which can suppress expanding and contracting vibrations of the elastic body along the longitudinal direction or a torsional vibration of the elastic body, whereby a resonance peak can be made lower.

The above object is, according to a first aspect of the invention solved by an objective lens driving apparatus, comprising:
a fixed portion
a movable portion including condenser means for condensing a light beam to irradiate a recording medium therewith, and holding means for holding the condenser means;
supporting means for supporting said movable portion against said fixed portion, so that said condenser means can be moved at least in focusing and tracking directions to said recording medium; and
driving means for moving said movable portion in focusing and tracking directions; wherein
said supporting means includes an elastic body for connecting said fixed portion and said movable portion, and a damping body provided for said elastic body;
said elastic body includes a first end portion attached to said movable portion, a second end portion attached to said fixed portion, and a connecting portion for connecting said first end portion and said second end portion;
**characterized in that** a fixed end portion (5e) extends from said second end portion (5g) toward said first end portion (5f) and that said connecting portion includes a first flexible linear portion, a second flexible linear portion extending along a different line to the line defined by the first linear portion, a coupling portion extending in a direction crossing said first and second linear portions to couple these portions, and a branch portion branching from said first linear portion and extending in a direction away from said first linear portion toward said second end portion, this branch portion having a free end;
one end of said first linear portion is directly connected to said first end portion;
one end of said second linear portion is directly connected to said second end portion;
the other ends of said first and second linear portions are directly interconnected connected by said coupling portion;
said damping body being adhered to said fixed end portion and said free end of said branch portion; and
the sum of the lengths of said first and second linear portions is substantially equal to a distance between said first and second end portions (claim 1).

Depending claims 2 to 4 are each specifying advantageous developments thereof.

According to a second aspect of the invention, the above object is solved by an objective lens driving apparatus according to claim 5.

Depending claims 6 to 8 are respectively specifying advantageous developments thereof.

By utilizing the present invention, functions of the coupling portion and the damping body provided for the elastic body suppress not only vibrations in the focusing and tracking directions but also expanding and contracting vibrations of the elastic body along the longitudinal direction and torsional vibrations of the elastic body, so that a resonance peak can be suppressed.

Additionally, since the entire linear portion is flexible, which ensures a long valid length thereof, a suitable primary frequency can be obtained even in a miniaturized light weighted movable portion.

Effects of the coupling portion and the damping body suppress the vibration not only of a primary resonance in the focusing and tracking directions, but also the vibration of a resonance in turning mode seen in a high range, which can lower the resonance peak on transfer function, resulting in stabilized operation of the objective lens.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing one embodiment of an object lens driving apparatus of the invention.

Figs. 2A to 2D are diagrams showing the shape and the deformed state of the elastic body used in the invention, while Fig. 2E is a diagram showing the shape of elastic body according to another embodiment.

Figs. 3A to 3D are graphs showing transfer function in focusing and tracking directions, respectively.

Fig. 4 is a perspective view showing a conventional objective lens driving apparatus.

Fig. 5 is a plan view of an objective lens driving apparatus showing a turn around an axis of the focusing direction.

Fig. 6 is a side view of an objective lens driving apparatus showing a turn around an axis of the tracking direction.

Figs. 7A to 7D are graphs of transfer function in focusing and tracking directions of a conventional objective lens driving apparatus, respectively.

### DESCRIPTION OF THE PREFERRED EMBODIMENTS

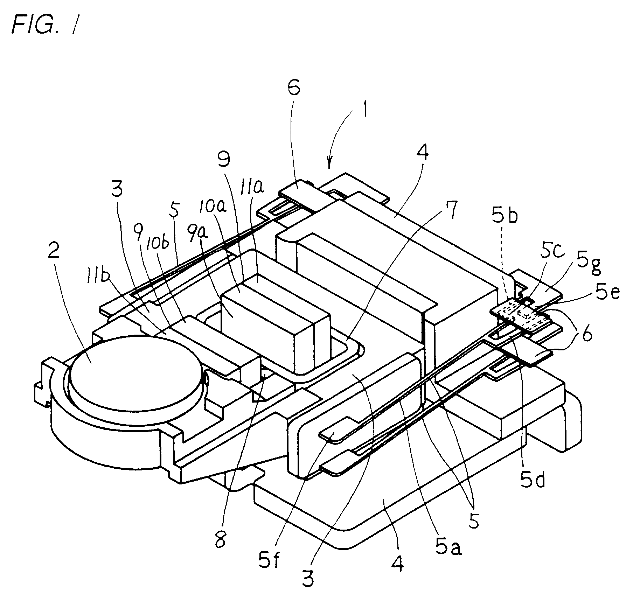

Fig. 1 is a perspective view of one embodiment of the present invention. The entire structure thereof is mostly the same as that of a conventional one in Fig. 4. Reference numerals in Fig. 1 correspond to reference numerals in Fig. 4, each obtained by subtracting 50.

In an objective lens driving apparatus 1, a lens holder 3 is provided to hold an objective lens 2, elastic bodies 5, 5 ... which support lens holder 3 movably in two directions against fixed portion 4 are attached at upper and lower positions of the fixed portion at both sides of lens holder 3, and damper members 6, 6 ... are adhered to the joint portion in the vicinity of fixed portion 4 of elastic bodies 5.

A focusing coil 7 and a tracking coil 8 are adhered to the center hole of lens holder 3. Parts of focusing coil 7 and tracking coil 8 are located in a magnetic gap 9a in a magnetic circuit 9 extended from fixed portion 4, and magnetic circuit 9 includes permanent magnets 10a, 10b and yoke portions 11a, 11b. Focusing coil 7 is coiled to enclose one of the permanent magnets 10a and yoke 11a, and a portion unnecessary to generate driving force is positioned outside magnetic gap 9a.

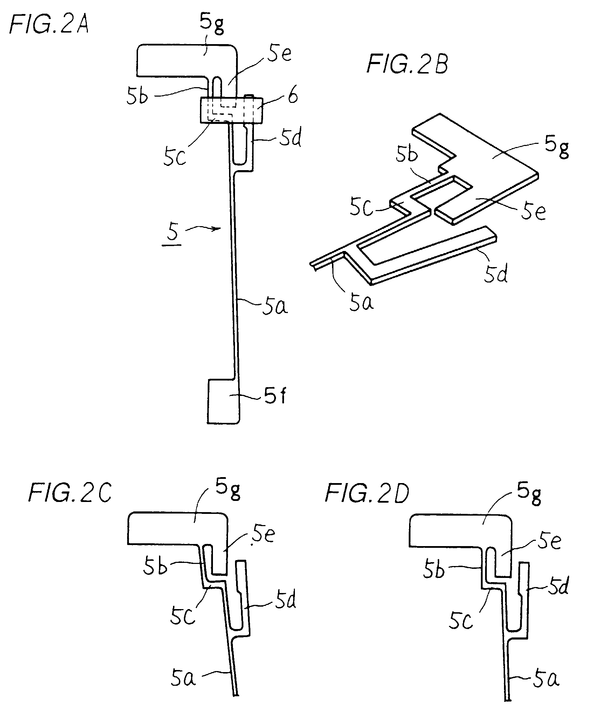

The supporting means shown in the Figures 2A to 2D comprises an elastic body 5 for connecting the fixed portion 4 and the movable portion shown in Fig. 1 and the damping member 6 adhered to bridge a gap between a fixed end portion 5e extending from said second end portion 5g and the branch portion 5d of the connecting portion. The elastic body 5 includes a first end portion 5f attached to the movable portion, a second end portion 5g attached to the fixed portion and a connecting portion for connecting the first end portion 5f and the second end portion 5g. The connecting portion includes a first flexible linear portion 5a in form of a straight line, a second flexible linear portion 5b in form of a straight line extending along a different line to the line defined by the first linear portion 5a, a coupling portion 5c extending in a direction essentially at right angle and crossing the first and second linear portions 5f, 5g to couple these portions and the branch portion 5d which branches from the first linear portion 5a and extends in a direction away from the first linear portion toward the second end portion 5g. The branch portion 5d has a free end in the vicinity of the second end portion 5g. One end of the first linear portion 5a of the elastic body 5 is directly connected to the first end portion 5f. One end of the second linear portion of the elastic body 5 is directly connected to the second end portion 5g and respective other ends of the first and second linear portions 5a, 5b are directly interconnected by said coupling portion 5c.

Fig. 2A shows that the sum of lengths of the first and second linear portions 5a and 5b is substantially equal to the distance between the first and second end portions 5f and 5g.

Further, the branch portion 5d includes a portion extending substantially in parallel to the first linear portion 5a. The coupling portion 5c extends in a direction substantially perpendicular to the first and second linear portions 5a and 5b.

A damping member 6 is adhered to bridge a gap between the branch portion 5d branching from first linear portion 5a and a fixed end 5e, extending from the second end portion 5g. Elastic body 5 is in the form of flat spring, and to one side or both sides thereof, damping member 6 is affixed. Damping member 6 may be formed of a rubber material. Alternatively it may be formed of an aluminum foil or the like with a material having a damping effect adhered thereto.

Deformation of the elastic body will be described referring to Figs. 2A to 2D. Elastic body 5 has a plane shape such as shown in Fig. 2A when external force is not exerted; however when the movable portion is moved in the focusing direction, first and second linear portions 5a and 5b are bent in the focusing direction, resulting in the difference in displacement between branch portion 5d and fixed end portion 5e as shown in Fig. 2B. On the other hand, when the movable portion is moved in tracking direction, first and second linear portions 5a and 5b are bent in the tracking direction, resulting in the difference in displacement between branch portion 5d and fixed end portion 5e as shown in Fig. 2C. When the force is exerted in the longitudinal direction of the first and second linear portions 5a and 5b, a bend, which appears when a torsional moment acts on the coupling portion 5C, appears in first and second linear portions 5a and 5b, as shown in Fig. 2D, causing the difference in displacement between branch portion 5d and fixed end portion 5e, due to the fact that first and second linear portions 5a and 5b are not on the same line. Such vibrations can be suppressed since damper member 6 is adhered to bridge the gap between branched arm portion 5d and fixed end portion 5e.

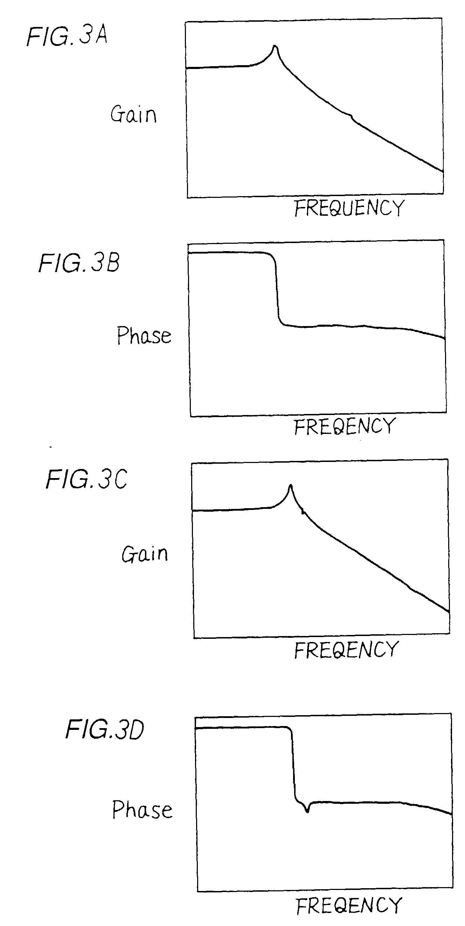

Examples of transfer function are shown in Figs. 3A to 3D. Corresponding to Figs. 7A to 7D, Figs. 3A and 3B are graphs of gain-to-frequency and phase-to-frequency transfer function in the focusing direction, and Figs. 3C and 3D are graphs of gain-to-frequency and phase-to-frequency transfer function in the tracking direction.

In the above described embodiment, the coupling portion 5c is provided near attaching portion at the side of second fixed portion 5g.

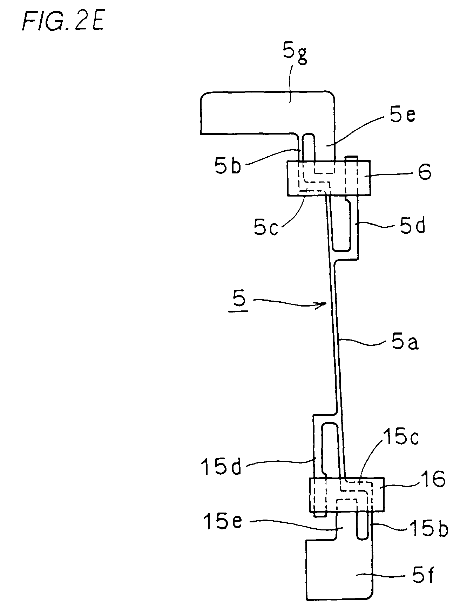

Fig. 2E shows a second embodiment of the elastic body 5 which can be included in the objective lens driving apparatus shown in Fig. 1. In addition to the members of the elastic body 5 as shown in the Figs. 2A to 2D, the elastic body of Fig. 2E includes on the side of the first end portion 5f a third flexible linear portion 15b essentially in form of a straight line and extending along a different line to the line defined by the first linear portion 5a, a second coupling portion 15c extending in a direction essentially in a right angle to and crossing the first and the third linear portions 5a and 15b to couple these portions and a second branch portion 15d branching from the first linear portion 5a and extending in a direction away from the second end portion 5g toward the first end portion 5f, said second branch portion branching from a second side of the first linear portion opposite to the first branch portion 5d and having a free end. Opposing ends of the first linear portion are connected to the first and second coupling portions 5c and 15c, respectively, one end of the third linear portion 15b is connected to the first end portion 5f and the other end of the third linear portion 15b is connected to the second coupling portion 15c. A second damping body 16 is adhered to the fixed end portion (15e) extending from said first end portion 5f and the free end of the second branch portion 15d. In the embodiment of Fig. 2D the sum of the lengths of the first, second and third linear portions 5a, 5b and 15b of the elastic body 5 is substantially equal to the distance between the first and second end portions 5f and 5g.

Additionally, the bending direction of coupling portions 5c and 15c, branched arm portions 5d and 15d are not limited to the direction shown in the figures, and a variety of combinations may be possible, such as a pattern bent in the manner contrary in the lateral directions to those shown in Figs. 2A-2E.

## Claims

1. An objective lens driving apparatus, comprising:
a fixed portion (4);
a movable portion including condenser means (2) for condensing a light beam to irradiate a recording medium therewith, and holding means (3) for holding the condenser means;
supporting means (5, 6) for supporting said movable portion against said fixed portion, so that said condenser means (2) can be moved at least in focusing and tracking directions to said recording medium; and
driving means (7, 8, 9) for moving said movable portion in focusing and tracking directions; wherein
said supporting means includes an elastic body (5) for connecting said fixed portion (4) and said movable portion, and a damping body (6) provided for said elastic body (5);
said elastic body (5) includes a first end portion (5f) attached to said movable portion, a second end portion (5g) attached to said fixed portion, and a connecting portion (5a-5c) for connecting said first end portion (5f) and said second end portion (5g);
**characterized in that** a fixed end portion (5e) extends from said second end portion (5g) toward said first end portion (5f) and that said connecting portion includes a first flexible linear portion (5a), a second flexible linear portion (5b) extending along a different line to the line defined by the first linear portion (5a), a coupling portion (5c) extending in a direction crossing said first and second linear portions to couple these portions, and a branch portion (5d) branching from said first linear portion (5a) and extending in a direction away from said first linear portion (5a) toward said second end portion (5g), this branch portion (5d) having a free end;
one end of said first linear portion (5a) is directly connected to said first end portion (5f);
one end of said linear portion (5b) is directly connected to said second end portion (5g);
the other ends of said first and second linear portions (5a, 5b) are directly interconnected by said coupling portion (5c);
said damping body (6) being adhered to said fixed end portion (5e) and said free end of said branch portion (5d); and
the sum of the lengths of said first and second linear portions (5a, 5b) is substantially equal to a distance between said first and second end portions (5f, 5g).

2. The objective lens driving apparatus according to claim 1, wherein
said branch portion (5d) includes a portion extending substantially in parallel to said first linear portion (5a).

3. The objective lens driving apparatus according to claim 1, wherein
said coupling portion (5c) extends in a direction substantially perpendicular to said first and second linear portions (5a, 5b).

4. The objective lens driving apparatus according to claim 1, wherein
said damping member (6) is further adhered to said coupling portion (5c), linear and said second linear portion (5b).

5. An objective lens driving apparatus, comprising:
a fixed portion (4);
a movable portion including condenser means (2) for condensing a light beam to irradiate a recording medium therewith, and holding means (2) for holding the condenser means;
supporting means (5, 6) for supporting said movable portion against said fixed portion, so that said condenser means (2) can be moved at least in focusing and tracking directions to said recording medium; and
driving means (7, 8, 9) for moving said movable portion in focusing and tracking directions; wherein
said supporting means (5, 6) includes an elastic body (5) for connecting said fixed portion (4) and said movable portion, and a damping body (6, 16) provided for the elastic body (5);
said elastic body (5) includes a first end portion (5f) attached to said movable portion, a second end portion (5g) attached to said fixed portion (4), and a connecting portion (5a-5c, 15b-15c) for connecting said first end portion (5f) and said second end portion (5g),
**characterized in that,** a first fixed end portion (15e) extends from said first end portion (5f) toward said second end portion (5g) and a second fixed end portion (5e) extends from said second end portion (5g) toward said first end portion (5f),
said connecting portion includes a first flexible linear portion (5a), a second flexible linear portion (5b) extending along a different line to the line defined by the first linear portion (5a), a third flexible linear portion (15b) extending along a different line to the line defined by the first linear portion (5a), a first coupling portion (5c) extending in a direction crossing said first and second linear portions (5a, 5b) to couple these portions, a second coupling portion (15c) extending in a direction crossing said first and third linear portions (5a, 15b) to couple these portions, a first branch portion (5d) branching from said first linear portion (5a) and extending in a direction away from said first end portion (5f) toward said second end portion (5g), said first branch portion having a free end, and a second branch portion (15d) branching from said first linear portion (5a) and extending in a direction away from said second end portion (5g) toward said first end portion (5f), said second branch portion having a free end, and opposing ends of said first linear portion (5a) are directly connected to the first and second coupling portions (5c, 15c) respectively;
one end of said second linear portion (5b) is directly connected to said second end portion (5g);
one end of said third linear portion (15b) is directly connected to said first end portion (5f);
the other end of said second linear portion (5b) is directly connected to said first coupling portion (5c);
the other end of said third linear portion (15b) is directly connected to said second coupling portion (15c);
said damping body (6, 16) includes a first damping body (6) being adhered to said second fixed end portion (5e) and said free end of said first branch portion (5d), and a second damping body (16) being adhered to said first fixed end portion (15e) and said free end of said second branch portion (15d); and
the sum of the lengths of said first, second and third linear portions (5a, 5b, 15b) is substantially equal to the distance between said first and second end portions (5f, 5g).

6. The objective lens driving apparatus according to claim 5, wherein
said first branch portion (5d) includes a portion extending substantially in parallel to said first linear portion (5a); and
said second branch portion (15d) includes a portion extending substantially in parallel to said first linear portion (5a).

7. The objective lens driving apparatus according to claim 5, wherein
said first coupling portion (5c) extends in a direction substantially perpendicular to said first and second linear portions (5a, 5b), and said second coupling portion (15c) extends in a direction substantially perpendicular to said first and third linear portions (5a, 15b).

8. The objective lens driving apparatus according to claim 5, wherein
said first damping body (6) is further adhered to said first coupling portion (5c) and said second linear portion (5b); and
said second damping body (16) is further adhered to said second coupling portion (15c) and said third linear portion (15b).

## Patentansprüche

1. Antriebsvorrichtung für eine Objektivlinse, mit:
- einem feststehenden Abschnitt (4);
- einem beweglichen Abschnitt mit einer Kondensoreinrichtung (2) zum Bündeln von Lichtstrahlen zum Beleuchten eines Aufzeichnungsträgers mit diesen, und mit einer Halteeinrichtung (3) zum Halten der Kondensoreinrichtung;
- einer Trägereinrichtung (5, 6) zum Haltern des beweglichen Abschnitts am feststehenden Abschnitt in solcher Weise, dass die Kondensoreinrichtung (2) zumindest in der Fokussier- und der Spurrichtung des Aufzeichnungsträgers verstellt werden kann; und
- einer Antriebseinrichtung (7, 8, 9) zum Verstellen des beweglichen Abschnitts in der Fokussier- und der Spurrichtung;
- wobei die Trägereinrichtung einen elastischen Körper (5) zum Verbinden des feststehenden Abschnitts (4) und des beweglichen Abschnitts sowie einen für den elastischen Körper (5) vorhandenen Dämpfungskörper (6) aufweist;
- wobei der elastische Körper (5) einen ersten, am beweglichen Abschnitt befestigten Endabschnitt (5f), einen zweiten, am feststehenden Abschnitt befestigten Endabschnitt (5g) und einen Verbindungsabschnitt (5a - 5c) zum Verbinden des ersten Endabschnitts (5f) mit dem zweiten Endabschnitt (5g) aufweist;
**dadurch gekennzeichnet**, dass sich ein feststehender Endabschnitt (5e) vom zweiten Endabschnitt (5g) aus zum ersten Endabschnitt (5f) hin erstreckt und der Verbindungsabschnitt einen ersten, flexiblen, geraden Abschnitt (5a), einen zweiten, flexiblen, geraden Abschnitt (5b), der sich entlang einer anderen Linie als der durch den ersten geraden Abschnitt (5a) gebildeten Linie erstreckt, einen Kopplungsabschnitt (5c), der sich in einer Richtung erstreckt, die den ersten und zweiten geraden Abschnitt überkreuzt, um diese Abschnitte zu koppeln, und einen Zweigabschnitt (5d) aufweist, der vom ersten geraden Abschnitt (5a) abzweigt und sich in einer Richtung weg vom ersten geraden Abschnitt (5a) zum zweiten Endabschnitt (5g) erstreckt, wobei dieser Zweigabschnitt (5d) ein freies Ende aufweist; wobei
- ein Ende dieses ersten geraden Abschnitts (5a) unmittelbar mit dem ersten Endabschnitt (5f) verbunden ist;
- ein Ende des zweiten geraden Abschnitts (5b) unmittelbar mit dem zweiten Endabschnitt (5g) verbunden ist;
- die anderen Enden des ersten und zweiten geraden Abschnitts (5a, 5b) unmittelbar durch den Kopplungsabschnitt (5c) miteinander verbunden sind;
- der Dämpfungskörper (6) am festen Endabschnitt (5e) und am freien Ende des Zweigabschnitts (5d) befestigt ist; und
- die Summe der Längen des ersten und zweiten geraden Abschnitts (5a, 5b) im Wesentlichen dem Abstand zwischen dem ersten und zweiten Endabschnitt (5f, 5g) entspricht.

2. Antriebsvorrichtung für eine Objektivlinse nach Anspruch 1, bei der der Zweigabschnitt (5d) einen Abschnitt aufweist, der sich im Wesentlichen parallel zum ersten geraden Abschnitt (5a) erstreckt.

3. Antriebsvorrichtung für eine Objektivlinse nach Anspruch 1, bei der sich der Kopplungsabschnitt (5c) in einer Richtung im Wesentlichen rechtwinklig zum ersten und zweiten geraden Abschnitt (5a, 5b) erstreckt.

4. Antriebsvorrichtung für eine Objektivlinse nach Anspruch 1, bei der das Dämpfungselement (6) ferner am Kopplungsabschnitt (5c) und am zweiten geraden Abschnitt (5b) befestigt ist.

5. Antriebsvorrichtung für eine Objektivlinse, mit:
- einem feststehenden Abschnitt (4);
- einem beweglichen Abschnitt mit einer Kondensoreinrichtung (2) zum Bündeln von Lichtstrahlen zum Beleuchten eines Aufzeichnungsträgers mit diesen, und mit einer Halteeinrichtung (3) zum Halten der Kondensoreinrichtung;
- einer Trägereinrichtung (5, 6) zum Haltern des beweglichen Abschnitts am feststehenden Abschnitt in solcher Weise, dass die Kondensoreinrichtung (2) zumindest in der Fokussier- und der Spurrichtung des Aufzeichnungsträgers verstellt werden kann; und
- einer Antriebseinrichtung (7, 8, 9) zum Verstellen des beweglichen Abschnitts in der Fokussier- und der Spurrichtung;
- wobei die Trägereinrichtung einen elastischen Körper (5) zum Verbinden des feststehenden Abschnitts (4) und des beweglichen Abschnitts sowie einen für den elastischen Körper (5) vorhandenen Dämpfungskörper (6) aufweist;
- wobei der elastische Körper (5) einen ersten, am beweglichen Abschnitt befestigten Endabschnitt (5f), einen zweiten, am feststehenden Abschnitt befestigten Endabschnitt (5g) und einen Verbindungsabschnitt (5a - 5c, 15b - 15c) zum Verbinden des ersten Endabschnitts (5f) mit dem zweiten Endabschnitt (5g) aufweist;
**dadurch gekennzeichnet**, dass
- sich ein erster fester Endabschnitt (15e) vom ersten Endabschnitt (5f) aus zum zweiten Endabschnitt (5g) hin erstreckt und sich ein zweiter fester Endabschnitt (5e) ausgehend vom zweiten Endabschnitt (5g) zum ersten Endabschnitt (5f) hin erstreckt;
- der Verbindungsabschnitt einen ersten, flexiblen, geraden Abschnitt (5a), einen zweiten, flexiblen, geraden Abschnitt (5b), der sich entlang einer anderen Linie als der durch den ersten geraden Abschnitt (5a) gebildeten Linie erstreckt, einen dritten, flexiblen, geraden Abschnitt (15b), der sich entlang einer anderen Linie als der durch den ersten geraden Abschnitt (5a) gebildeten Linie erstreckt, einen Kopplungsabschnitt (5c), der sich in einer den ersten und zweiten geraden Abschnitt (5a, 5b) überkreuzenden Richtung erstreckt, um diese Abschnitte zu verbinden, einen zweiten Kopplungsabschnitt (15c), der sich in einer dem ersten und dritten geraden Abschnitt (5a, 5b) überkreuzenden Richtung erstreckt, um diese Abschnitte zu koppeln, einen ersten Zweigabschnitt (5d), der vom ersten geraden Abschnitt (5a) abzweigt und sich in einer Richtung weg vom ersten Endabschnitt (5f) zum zweiten Endabschnitt (5g) hin erstreckt, wobei dieser erste Zweigabschnitt ein freies Ende aufweist, und einen zweiten Zweigabschnitt (15d) aufweist, der vom ersten geraden Abschnitt (5a) abzweigt und sich in einer Richtung weg vom zweiten Endabschnitt (5g) zum ersten Endabschnitt (5f) hin erstreckt, wobei dieser zweite Endabschnitt ein freies Ende aufweist und wobei entgegengesetzte Enden des ersten geraden Abschnitts (5a) unmittelbar mit dem ersten bzw. zweiten Kopplungsabschnitt (5c, 15c) verbunden sind;
- ein Ende des zweiten geraden Abschnitts (5b) unmittelbar mit dem zweiten Endabschnitt (5g) verbunden ist;
- ein Ende des dritten geraden Abschnitts (15b) unmittelbar mit dem ersten Endabschnitt (15f) verbunden ist;
- das andere Ende des zweiten geraden Abschnitts (5b) unmittelbar mit dem ersten Kopplungsabschnitt (5c) verbunden ist;
- das andere Ende des dritten geraden Abschnitts (15b) unmittelbar mit dem zweiten Kopplungsabschnitt (15c) verbunden ist;
- der Dämpfungskörper (6, 16) einen ersten Dämpfungskörper (6), der am zweiten, festen Endabschnitt (5e) und am genannten freien Ende des ersten Zweigabschnitts (5d) befestigt ist, und einen zweiten Dämpfungskörper (16) aufweist, der am ersten, festen Endabschnitt (15e) und am genannten freien Ende des zweiten Zweigabschnitts (15d) befestigt ist; und
- die Summe der Längen des ersten, zweiten und dritten geraden Abschnitts (5a, 5b, 15b) im Wesentlichen dem Abstand zwischen dem ersten und zweiten Endabschnitt (5f, 5g) entspricht.

6. Antriebsvorrichtung für eine Objektivlinse nach Anspruch 5, bei der
- der erste Zweigabschnitt (5d) einen Abschnitt aufweist, der sich im Wesentlichen parallel zum ersten geraden Abschnitt (5a) erstreckt; und
- der zweite Zweigabschnitt (15d) einen Abschnitt aufweist, der sich im Wesentlichen parallel zum ersten geraden Abschnitt (5a) erstreckt.

7. Antriebsvorrichtung für eine Objektivlinse nach Anspruch 5, bei der sich der erste Kopplungsabschnitt (5c) in einer Richtung im Wesentlichen rechtwinklig zum ersten und zweiten geraden Abschnitt (5a, 5b) erstreckt und sich der zweite Kopplungsabschnitt (15c) in einer Richtung im Wesentlichen rechtwinklig zum ersten und dritten geraden Abschnitt (5a, 15b) erstreckt.

8. Antriebsvorrichtung für eine Objektivlinse nach Anspruch 5, bei der
- der erste Dämpfungskörper (6) ferner am ersten Kopplungsabschnitt (5c) und am zweiten geraden Abschnitt (5b) befestigt ist; und
- der zweite Dämpfungskörper (16), ferner am zweiten Kopplungsabschnitt (15c) und am dritten geraden Abschnitt (15f) befestigt ist.

## Revendications

1. Appareil de commande de lentille d'objectif comportant:
une partie fixe (4);
une partie mobile comprenant un moyen condenseur (2) pour condenser un faisceau lumineux destiné à irradier un support d'enregistrement, et un moyen de maintien (3) pour maintenir le moyen condenseur;
un moyen de support (5, 6) pour supporter ladite partie mobile contre ladite partie fixe, de façon à ce que ledit moyen condenseur (2) puisse se déplacer au moins dans les directions de focalisation et de suivi de piste vers ledit support d'enregistrement ; et
un moyen de commande (7, 8, 9) pour déplacer ladite partie mobile dans les directions de focalisation et de suivi de piste; dans lequel
ledit moyen de support comprend un corps élastique (5) pour relier ladite partie fixe (4) et ladite partie mobile, et un corps amortisseur (6) associé audit corps élastique (5); ledit corps élastique (5) comprend une première extrémité (5f) fixée à ladite partie mobile, une seconde extrémité (5g) fixée à ladite partie fixe et une partie de liaison (5a à 5c) pour relier ladite première extrémité (5f) à ladite seconde extrémité (5g);
**caractérisé en ce qu'**une extrémité fixe (5e) s'étend à partir de ladite seconde extrémité (5g) vers ladite première extrémité (5f) et en ce que ladite partie de liaison comprend une première partie linéaire flexible (5a), une seconde partie linéaire flexible (5b) s'étendant le long d'une ligne différente vers la ligne définie par la première partie linéaire (5a), une partie de couplage (5c) s'étendant dans une direction coupant lesdites première et seconde parties linéaires pour coupler ces parties, et une partie en dérivation (5d) issue de ladite première partie linéaire (5a) et s'étendant dans une direction s'éloignant de ladite première partie linéaire (5a) vers ladite seconde extrémité (5g), cette partie en dérivation (5d) ayant une extrémité libre;
une extrémité de ladite première partie linéaire (5a) est directement reliée à ladite première extrémité (5f);
une extrémité de ladite seconde partie linéaire (5b) est directement reliée à ladite seconde extrémité (5g);
les autres extrémités desdites première et seconde parties linéaires (5a, 5b) sont directement reliées entre elles par ladite partie de couplage (5c);
ledit corps amortisseur (6) adhérant à ladite extrémité fixe (5e) et à ladite extrémité libre de ladite partie en dérivation (5d); et
la somme des longueurs desdites première et seconde parties linéaires (5a, 5b) est sensiblement égale à la distance entre lesdites première et seconde extrémités (5f, 5g).

2. Appareil de commande de lentille d'objectif selon la revendication 1, dans lequel
ladite partie en dérivation (5d) comporte une partie s'étendant sensiblement dans une direction parallèle à ladite première partie linéaire (5a).

3. Appareil de commande de lentille d'objectif selon la revendication 1, dans lequel
ladite partie de couplage (5c) s'étend dans une direction sensiblement perpendiculaire auxdites première et seconde parties linéaires (5a, 5b).

4. Appareil de commande de lentille d'objectif selon la revendication 1, dans lequel
ledit élément amortisseur (6) adhère en outre à ladite partie de couplage (5c) et à ladite seconde partie linéaire (5b).

5. Appareil de commande de lentille d'objectif comportant:
une partie fixe (4);
une partie mobile comprenant un moyen condenseur (2) pour condenser un faisceau lumineux destiné à irradier un support d'enregistrement, et un moyen de maintien (3) pour maintenir le moyen condenseur;
un moyen de support (5, 6) pour supporter ladite partie mobile contre ladite partie fixe, de façon à ce que ledit moyen condenseur (2) puisse se déplacer au moins dans les directions de focalisation et de suivi de piste vers ledit support d'enregistrement ; et
un moyen de commande (7, 8, 9) pour déplacer ladite partie mobile dans les directions de focalisation et de suivi de piste; dans lequel
ledit moyen de support comprend un corps élastique (5) pour relier ladite partie fixe (4) et ladite partie mobile et un corps amortisseur (6, 16) associé audit corps élastique (5); ledit corps élastique (5) comprend une première extrémité (5f) fixée à ladite partie mobile, une seconde extrémité (5g) fixée à ladite partie fixe (4) et une partie de liaison (5a à 5c, 15b à 15c) pour relier ladite première extrémité (5f) à ladite seconde extrémité (5g);
**caractérisé en ce qu'**une première extrémité fixe (15e) s'étend à partir de ladite première extrémité (5f) vers ladite seconde extrémité (5g) et qu'une seconde extrémité fixe (5e) s'étend à partir de ladite seconde extrémité (5g) vers ladite première extrémité (5f), et en ce que ladite partie de liaison comprend une première partie linéaire flexible (5a), une deuxième partie linéaire flexible (5b) s'étendant le long d'une ligne différente vers la ligne définie par la première partie linéaire (5a), une troisième partie linéaire flexible (15b) s'étendant le long d'une ligne différente vers la ligne définie par la première partie linéaire (5a), une première partie de couplage (5c) s'étendant dans une direction coupant lesdites première et deuxième parties linéaires (5a, 5b) pour coupler ces parties, une seconde partie de couplage (15c) s'étendant dans une direction coupant lesdites première et troisième parties linéaires (5a, 15b) pour coupler ces parties, une première partie en dérivation (5d) issue de ladite première partie linéaire (5a) et s'étendant dans une direction s'éloignant de ladite première extrémité (5f) vers ladite seconde extrémité (5g), ladite première partie en dérivation ayant une extrémité libre, et une seconde partie en dérivation (15d) issue de ladite première partie linéaire (5a) et s'étendant dans une direction s'éloignant de ladite seconde extrémité (5g) vers ladite première extrémité (5f), ladite seconde partie en dérivation ayant une extrémité libre, et les extrémités opposées de ladite première partie linéaire (5a) sont respectivement directement reliées aux première et seconde parties de couplage (5c, 15c);
une extrémité de ladite deuxième partie linéaire (5b) est directement reliée à ladite seconde extrémité (5g);
une extrémité de ladite troisième partie linéaire (15b) est directement reliée à ladite première extrémité (5f);
l'autre extrémité de ladite deuxième partie linéaire (5b) est directement reliée à ladite première partie de couplage (5c);
l'autre extrémité de ladite troisième partie linéaire (15b) est directement reliée à ladite seconde partie de couplage (15c);
ledit corps amortisseur (6, 16) comprend un premier corps amortisseur (6) qui adhère à ladite seconde extrémité fixe (5e) et à ladite extrémité libre de ladite première partie en dérivation (5d), et un second corps amortisseur (16) qui adhère à ladite première extrémité fixe (15e) et à ladite extrémité libre de ladite seconde partie en dérivation (15d); et
la somme des longueurs desdites première, deuxième et troisième parties linéaires (5a, 5b, 15b) est sensiblement égale à la distance entre lesdites première et seconde extrémités ( 5f, 5g).

6. Appareil de commande de lentille d'objectif selon la revendication 5, dans lequel
ladite première partie en dérivation (5d) comprend une partie qui s'étend sensiblement parallèlement à ladite première partie linéaire (5a); et
ladite seconde partie en dérivation (15d) comprend une partie qui s'étend sensiblement parallèlement à ladite première partie linéaire (5a).

7. Appareil de commande de lentille d'objectif selon la revendication 5, dans lequel
ladite première partie de couplage (5c) s'étend dans une direction sensiblement perpendiculaire auxdites première et deuxième parties linéaires (5a, 5b) et ladite seconde partie de couplage (15c) s'étend dans une direction sensiblement perpendiculaire auxdites première et troisième parties linéaires (5a, 15b).

8. Appareil de commande de lentille d'objectif selon la revendication 5, dans lequel
ledit premier corps amortisseur (6) adhère en outre à ladite première partie de couplage (5c) et à ladite deuxième partie linéaire (5b); et
ledit second corps amortisseur (16) adhère en outre à ladite seconde partie de couplage (15c) et à ladite troisième partie linéaire (15b).
